# EUROPEAN PATENT SPECIFICATION

(11) **EP 1 760 937 B1**
(45) Date of publication and mention of the grant of the patent: **11.01.2012**
(21) Application number: 06118654.0
(22) Date of filing: 09.08.2006
(51) Int. Cl.: H04L 12/24

(54) **Management of a switch fabric through functionality conservation**
Verwaltung eines Koppelfelds mittels Funktionalitätserhaltung
Gestion d'une matrice de commutation à travers la conservation de la fonctionnalité

(30) Priority: 31.08.2005 US 216903
(43) Date of publication of application: 07.03.2007
(73) Proprietor: McData Corporation, Broomfield, CO 80021 (US)
(72) Inventor: Willeke, Jesse, Broomfield, CA 80020 (US); Pelissier, Joseph, Hillsboro, OR 97123 (US); Ramkumar, Gurumurthy, Palo Alto, CA 94306 (US)
(74) Representative: Moore, Barry

(56) References cited:
- WO-A-2005/004408
- US-A1- 2002 004 912

## Description

### Technical Field

This invention relates generally to computer networks such as storage area networks, and more particularly to the management of switches and the fabric created by switches.

### Background

A computer storage area network (SAN) may be implemented as a high-speed, special purpose network that interconnects different kinds of data storage devices with associated data servers on behalf of a large network of users. Typically, a storage area network is part of or otherwise connected to an overall network of computing resources for an enterprise. The storage area network may be clustered in close geographical proximity to other computing resources, such as mainframe computers, or it may alternatively or additionally extend to remote locations for various storage purposes whether for routine storage or for situational backup or archival storage using wide area network carrier technologies.

SANs or like networks can be complex systems with many interconnected computers, switches and storage devices. Often many switches are used in a SAN or a like network for connecting the various computing resources; typically such switches being configured in an interwoven fashion also known to as a fabric.

Various limitations in the practical size of switch fabrics that may be constructed have been encountered. These can, for example, be size or time limits, as for example where there can be memory or domain identification size limits, or processing or speed restrictions due, for example, to switch intercommunications related to zoning or principal switch selection or selection of the shortest path first, to name but a few. In more detail, a domain identification (ID) size issue can be attributed to certain hardware limits, some conventional devices currently providing for as few as thirty-one (31) domain IDs, or attributed to conventional standards, as in the current SAN standard which supports only 239 domain IDs. Speed and/or processing issues arise in various switch intercommunications, as for example, during zone pushes and merges, i.e., where zone conflicts are verified at interconnection or other initialization. Similarly, quite a large number of switch intercommunications and/or processing can be involved in the selection of the principal switch or in the selection of any fabric shortest path first (FSPF). Document US 2002/0004912 discloses the preamble of claim 1.

### Summary

Implementations described and claimed herein address the foregoing problems by providing methods and systems which provide improvements in the management of computer or communication network systems. Briefly stated, the present invention involves a method for managing a switch fabric containing at least two switch devices, the method including: establishing a provider/client mode of operation between the at least two switch devices; and operating the at least two switch devices in the provider/client mode; wherein the operating of the at least two switch devices in a provider/client mode includes conserving at least one functionality of at least one of the at least two switch devices.

The technology hereof increases the practical limit of the number of switches and the number of end devices that may exist in a switch fabric. This technology thus increases the practical limit on the size of a switch fabric.

In some implementations, articles of manufacture are provided as computer program products. One implementation of a computer program product provides a computer program storage medium readable by a computer system and encoding a computer program. Another implementation of a computer program product may be provided in a computer data signal embodied in a carrier wave or other communication media by a computing system and encoding the computer program.

Accordingly the invention provides a method of managing a switch fabric according to claim 1. Advantageous embodiments are provided in the dependent claims thereto. The invention also provides a computer program which when run on a computer is adapted to carry out the method steps of the methodology of the invention. Furthermore a system according to the independent system claim is provided.

Other implementations are also described and recited herein.

### Brief Descriptions of the Drawings

In the drawings:

FIG. 1 illustrates an exemplary computing and storage framework which may include a local area network (LAN) and a storage area network (SAN).

FIG. 2 illustrates a further exemplary network.

FIG. 3 illustrates a still further exemplary network.

FIG. 4 is a process diagram depicting an implementation of the described technology.

FIG. 5 is a further process diagram depicting another implementation of the described technology.

FIG. 6 illustrates an exemplary system useful in implementations of the described technology.

### Detailed Description

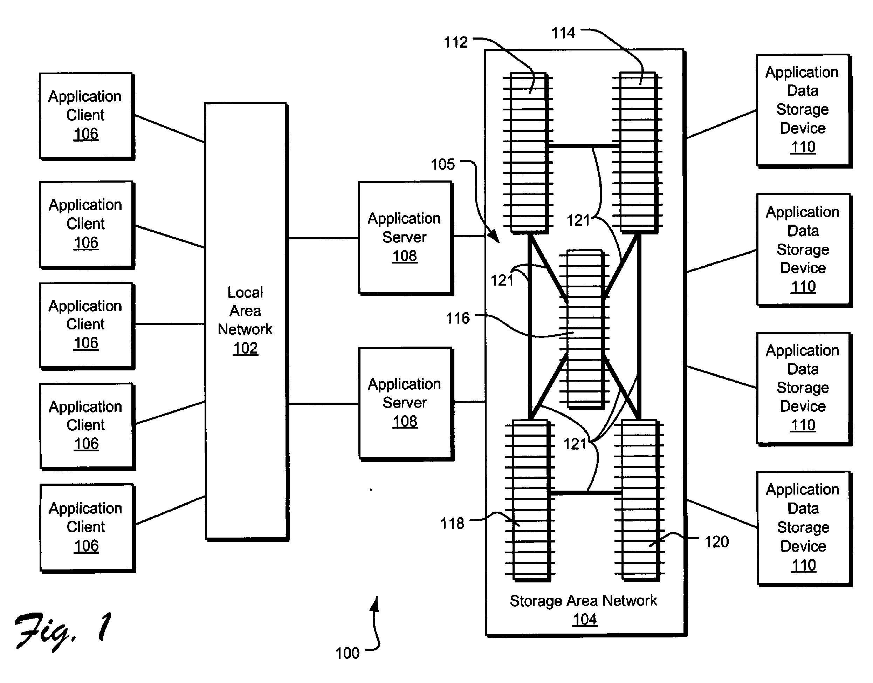

FIG. 1 illustrates an exemplary computing and storage framework 100 including a local area network (LAN) 102 and a storage area network (SAN) 104. Various application clients 106 are networked to representative application servers 108 via the LAN 102. Users can access applications resident on the application servers 108 through the application clients 106. The applications may depend on data (e.g., an email database) stored at one or more of the respective application data storage devices 110. Accordingly, the SAN 104 provides connectivity between the application servers 108 and the application data storage devices 110 to allow the applications to access the data they need to operate. It should be understood that a wide area network (WAN) may also be included on either side of the application servers 108 (i.e., either combined with the LAN 102 or combined with the SAN 104).

One or more switches may be used in a network hereof, as for example the plurality of switches 112, 114, 116, 118 and 120 shown in the SAN 104 in FIG. 1. These switches 112-120 are often interconnected to provide a distributed redundant path configuration. Such distributed interconnections, identified generally as interconnections 121 in FIG. 1, create what may be referred to as a fabric 105. Each of the various switches may be connected in redundant manners via plural interconnections 121 to respective pluralities of other switches to ensure that if any particular connection between switches is not active for any reason, then a redundant path may be provided via the other connections and the other switches. Accordingly, such a distributed architecture of the fabric 105 can thus facilitate load balancing, enhance scalability, and improve fault tolerance within any particular switch.

Note, though only one fabric 105 is shown and described, many fabrics may be used in a SAN, as can many combinations and permutations of switches and switch connections. Commonly, such networks may be run on a protocol known as fibre channel. These fabrics may include a long-distance connection mechanism (not shown) such as asynchronous transfer mode (ATM) and/or Internet Protocol (IP) connections that enable sites to be separated by arbitrary distances. Furthermore, each of the switches, e.g., each of switches 112-120 can take any of multiple forms, including a stackable or rackable module configuration as described further below.

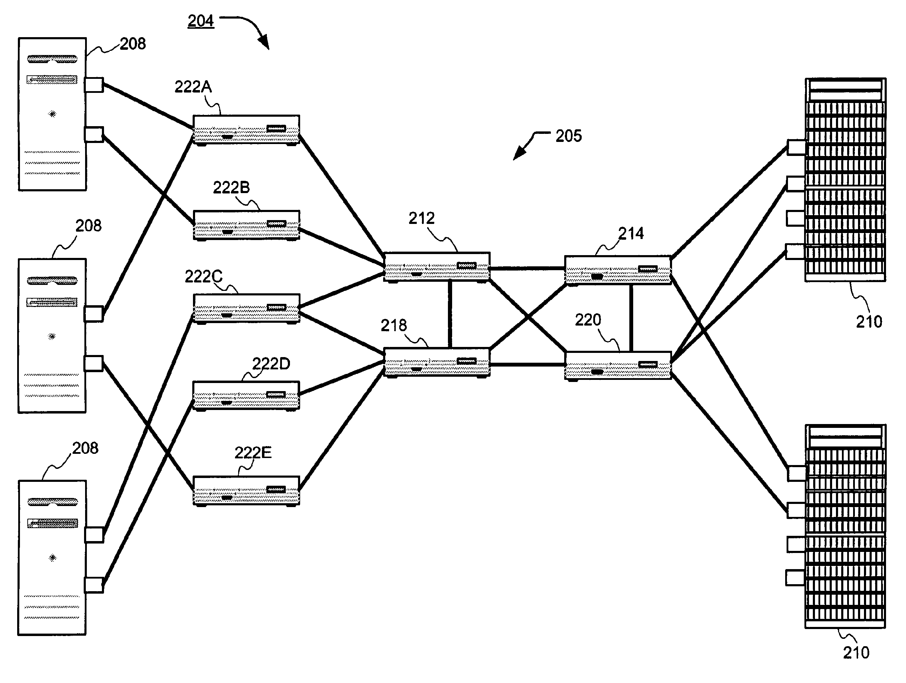

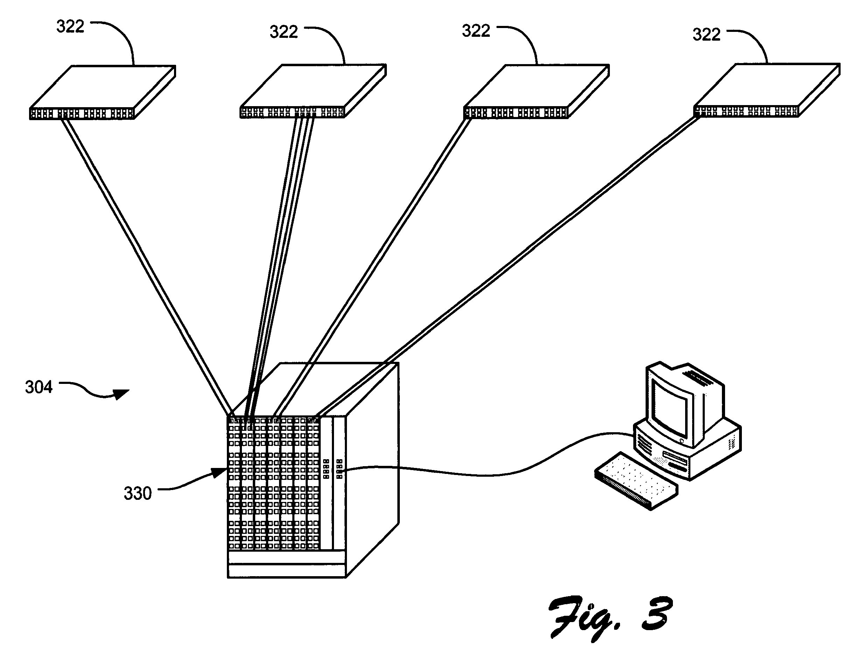

FIG. 2 provides an alternative view more particularly of a SAN 204 where it can be seen that respective ports of the application servers or hosts 208 are connected by any of various paths through the variety of switches in the fabric 205 to ports of the storage arrays 210. Of note in FIG. 2 is a core configuration of switches 212, 214, 218 and 220 which are interconnected as described above, and a further set of switches 222, see particularly switches 222A, 222B, 222C, 222D and 222E, which are shown here connected in a more limited fashion to one (or more) of the core switches 212 and 218. These distributed, non-core switches may also be referred to arbitrarily as leaf switches, a distinction hereof being that the leaf switches are connected such that they do not communicate in between any two other switches (i.e., see that switches 222 are connected only on one side to any other switches, namely switches 212 and 218, and connected on the other side to non-switch devices, here servers 208). A purpose for such a distribution of these non-core or leaf switches 222 will be described below. An alternative view with distributed switches 322 like these switches 222 is shown in FIG. 3. Switches 322 are shown connected to switches in a rack 330 which is also referred to as a director 330. The director and switches form a fabric 304. Note, a rack such as this may include multiple modules, a module generally being an enclosed package that can provide its own cooling and its own power, as opposed to a blade, which is dependent upon cooling and power from a chassis.

In either or both of the examples of FIGs. 2 or 3, the switches 222 or 322 may act or at least may have a capability to act in a fashion fully like those interconnected switches 212, 214, 218 and 220 in the core of the fabric 204, 304. However, according hereto, these non-core switches 222, 322 are intended to have an additional capability to operate in an alternative mode providing functionality conservation. In general, the mode of functionality conservation provides for the switches to operate with at least one fewer need for processing or intercommunications with one or more other devices or switches in the fabric. Thus, in one common form hereof, it may be that the distributed switches 222, 322 are connected to fewer other fabric devices, as often to only one (or a typical very few) other switches. Such fewer connections are shown for example by the connections in Fig. 2 where switches 222A, 222B, 222D and 222E are connected to only one other switch device; particularly, switches 222A and 222B being connected only to switch 212, and switches 222D and 222E being connected only to switch 218. Switch 222C is connected to both 212 and 218, though still being connected to fewer fabric devices than are the core switches 212-220.

When connected as shown in FIG. 2, the switches 222 may continue to remain fully operational as in a conventional sense of operation, or, as according to the present disclosure, may be made operational in a functionality conservation mode. The functionality conservation mode involves an adaptation of the particular switches such that each of the switches which will operate with conserved functionality will adopt or assume an operating mode which is herein referred to as a client/provider or provider/client mode. Typically, the switch to have conserved functionality will effectively become what is hereafter referred to as a client switch. A switch to which a client switch is connected will then assume what is referred to hereafter as a provider mode and/or become a provider switch. Provider Switches provide various functions on behalf of Client Switches, reducing the processing and memory requirements of the Client Switches. In certain instances, the processing and memory requirements of the provider switches may also be reduced. As described herebelow, one or more operating efficiencies may be made possible.

Reaching this altered operational state may be implemented through use of one or more protocol enhancements, or a set of one or more simplified protocols that singularly and/or in combination reduce the processing and memory requirements to support a large fabric, particularly in a Fibre Channel Fabric embodiment. These protocol enhancements may provide particular benefit in a large fabric made of many low port-count switches. These protocols may include: 1) A definition of a Provider Switch and a Client Switch, and this may include a method and/or an enhancement to an existing protocol or protocols to enable switches to advertise to adjoining switches an ability to operate as a Client or a Provider switch, and to automatically utilize these capabilities, or a subset thereof, when supported by adjacent switches; 2) A method and/or an enhancement to an existing protocol or protocols to enable one or more Client Switches to share the domain ID of a Provider Switch to which the client switch or switches are attached; 3) A method and/or an enhancement to an existing protocol or protocols to enable a subset of two or more Client Switches to share a domain ID amongst themselves; 4) A method and/or an enhancement to an existing protocol or protocols to exclude Client Switches from the Principal Switch election process; 5) A method and/or an enhancement to an existing protocol or protocols that decreases the participation required of a Client Switch in the Fibre Channel Fabric Shortest Path First (FSPF) protocol; 6) A method and/or an enhancement to an existing protocol or protocols to reduce the participation of Client switches in the maintenance of the Fibre Channel distributed zone database; 7) A method and/or an enhancement to an existing protocol or protocols to enable a Client switch to maintain a subset of the distributed zone database (as opposed to the complete database).

As introduced above, the ability to and the protocol for defining Provider and Client Switches can provide various benefits such as reducing the processing and memory requirements of the Client Switches. In certain instances, the processing and memory requirements of the provider switches may also be reduced. Moreover, the capability for the switches themselves to advertise, automatically or otherwise, to adjoining switches their ability to operate as a Client or Provider switch provides the benefit of reduced operator intervention.

Similarly, the sharing of the domain ID of a Provider Switch with the Client switch, and/or the sharing by a subset of two or more Client Switches of a domain ID amongst themselves may provide for: a) Making possible the construction of a Fibre Channel Fabric that exceeds the 239-Switch limit imposed by the current SAN standard; b) Making possible the construction of a Fibre Channel Fabric that exceeds a smaller limit on the number of Switches imposed by a particular Switch implementation; c) Reduction of the processing and memory requirements of the Switch in the Fabric elected "Principal Switch" in accordance with the above-mentioned protocol; d) Reduction of the time required to initialize a Fibre Channel Fabric.

Moreover, the ability of excluding any one or more Client Switches from the Principal Switch election process may provide for: a) Reduction in processing and memory requirements of both AFS-C and AFS-P Switches; b) Reduction in the time required to elect a Principal Switch; c) Reduction in disruption to the Fibre Channel Fabric when an AFS-C Switch joins or leaves the Fabric; d) Reduction of the time required to initialize a Fibre Channel Fabric.

Similarly, the decreasing of the participation required of Client Switches in the Fibre Channel Fabric Shortest Path First (FSPF) protocol may provide: a) Reduction in the processing and memory requirements of both AFS-C and AFS-P Switches.; b) Reduction in the time required for the routes to be determined throughout a Fibre Channel Fabric; c) Reduction in the time required for a Fibre Channel Fabric to respond to topological changes necessitating a change to the routing within the Fibre Channel Fabric; and, d) Reduction of the time required to initialize a Fibre Channel Fabric.

Likewise, reducing the participation of Client switches in the maintenance of a distributed zone database may provide the following benefits: a) Reduction in the non-volatile memory required on AFS-C switches; b) Reduction of the processing requirements of both AFS-C and AFS-P switches; c) Reduction of the time required to initialize a Fibre Channel Fabric; d) Reduction of the time required for an AFS-C switch to join a Fibre Channel Fabric. Additionally, enabling a Client switch to maintain a subset of the distributed zone database (as opposed to the complete database) may provide the following benefits: a) Reduction of the processing and memory requirements of AFS-C switches; b) Reduction of the time required to initialize a Fibre Channel Fabric; and, c) Reduction of the time required for an AFS-C switch to join a Fibre Channel Fabric.

Ultimately, one or more of these new set of techniques should dramatically increase the practical limit of the number of switches which may be built into and maintained in a fabric. Again, the client/provider arrangement is a mode of operation. The otherwise "normal" mode of operation may preferably be maintained for small fabrics and/or for direct connect storage, whereas the client/provider mode of operation may be established for larger fabrics. One alternative defmition of what constitutes a client mode of operation for a particular switch is that such a switch in the client mode never forwards a frame from one ISL (inter switch link; i.e., between switches) to another.

In more particular detail, the Domain Identification (ID) Conservation Mode will next be described. First it may be noted that conventional Domain IDs are means of identifying switches for routing purposes. Conventionally, these are consumed rapidly; often by as many as hundreds of blade racks, with additional consumption by Inter-Fabric routers and iFCP products. The current standard for Fibre Channel Fabrics limits the number of available domain IDs to 239; although some switch products have even smaller structural limitations (e.g., 31 domain IDs in some current devices). However, according to the disclosure here, when connected to a single Provider switch, one or more Client Switches do not need fabric-wide unique Domain IDs. Rather, each of these client switches may use the same Domain ID as the Provider switch to which they are connected. The Provider switch provides a subset of the area and/or port space for use by each such Client Switch. To the rest of the fabric, the set of Client Switches with a common Domain ID looks like a single switch. They look like the Provider Switch. So long as all routing takes place through that Provider Switch, the correct routing through an otherwise standard Fibre Channel Fabric remains possible, and only that Provider switch knows otherwise. It may also be possible to extend this domain sharing to Client switches connected to multiple Provider switches (see switch 222C in Fig. 2), although with significant restrictions.

A particular Domain ID Conservation Example of a process for domain ID sharing includes the following. First, it may be noted that each Provider switch "owns" the entire area/port space for its Domain, then upon connection of one or more Client Switches (switches capable of operating in client mode) to the Provider switch, a negotiation occurs where either or both the Provider and/or the Client indicate if they are capable of and/or are already operating in Domain ID conservation mode. Then, the Provider switch allocates a subset of its space for use in the Domain ID conservation mode by the Client switch. If the provider switch is out of space, a new Domain ID is requested from the Principal Switch (see Principal switch selection process discussed below). Note, domain IDs (or addresses) may be allocated based on Areas or Area/Port combinations depending generally on the respective routing capabilities of the Client and Provider switches.

There are two parts of what may be viewed as Zone Database functionality conservation. These are generally referred to herein as zone merges and zone pushes. These may be separately or jointly operable within the disclosure hereof. Note, zoning is a fibre channel protocol concept which has correspondent operations within alternative protocols, using different nomenclatures. Even so, the concepts hereof as applied to zoning are equally applicable to these other processes.

It may first be noted for conventional zone merges that when a new switch joins a fabric, a zone merge operation must conventionally occur. This process entails the pushing of the entire zone database to the switch joining the fabric. Then, this switch compares the entire zone database to its local zone database to check for conflicts, which if found would then prevent that switch from joining the fabric. This conventional process is computationally intensive. Moreover, the zone database is typically stored in non-volatile memory which is a limited resource for these cost sensitive devices. Now however, with the currently described client/provider mode of operation which may include a zone function conservation mode, the Client Switches may be adapted to not store the zone database locally, and may be adapted to not push nor receive a zone database, and to not check for consistency of the zone database. And, such client switches will not isolate (not join the fabric) as a result. Instead, the zone member data may be pushed by or retrieved from the Provider switch "as needed" (e.g. during FLOGI) if and/or whenever it may be needed by the Client switch.

The process is substantially the same for any zoneset modifications, i.e., changes to a zone not simply related to merging a new switch into a fabric. Conventionally, to modify a Zoneset, an entire new Zoneset must be pushed to every switch and then activated. However, with the client/provider mode described here, Client switches are simply notified of any zone membership changes that affect them. New Zoneset data is pushed only among the non Client switches, i.e., only among Provider Switches and/or any switches not operating in the client/provider mode.

The Principal Switch Selection process is a similar functionality which may be conserved here. The principal switch selection process conventionally requires data communications amongst the all switches of the fabric for determining which switch should be elected (usually by having the highest or lowest world wide name?), and because all switches must conventionally participate, this process thus also grows exponentially with the number of switches in the fabric. However, according to the protocols hereof, a Client Switch has this functionality conserved so that it does not participate in this process, and ultimately never becomes the Principal Switch. Moreover, nor does the client switch need to know which Switch is the Principal Switch, noting, that the Principal Switch is primarily involved in handing out domain IDs to the fabric devices, and even if the Client is not sharing the Domain ID of the Provider, the Provider may nonetheless be the communicator and controller of the Domain ID for the Client, thus, the Client need not communicate with the Principal Switch for any such purpose. Therefore, no EFPs (Exchange Fabric Parameters) are exchanged between Providers and Clients. Clients simply wait for a DIA (Domain Identifier Assigned).

A further operating process whose functionality may be conserved hereby is a selection process for determining the Fabric Shortest Path First, also referred to as FSPF. FSPF is another process conventionally involving communications amongst all switches in a fabric and internal comparisons which causes the overall processing to increase exponentially with the number of switches in the fabric. Conventionally, every switch must maintain a copy of the Link State Record (LSR) from every other switch in the fabric, and thus every switch must participate in communicating of these LSRs back and forth. Indeed, as was the case with zoning information (see above), on Fabric Build, the LSR from every other switch must be loaded in the switch joining the fabric. And, conversely, the LSR from the switch joining must be flooded to every other switch on the fabric. However, a Client Switch according hereto is adapted to have no use for this data. Rather, Client Switches instead receive a single "Summary Record" from each of their adjacent Provider Switches, and from the summary records, computation of actual routes is trivial. Client Switches therefore never receive, generate, process, store or flood a Link State Record. Note, the Provider switches must compute the data for a summary record anyway; this is required for their own forwarding decision. However, this data would now be formatted by the Provider Switches into the proper frame format and forwarded to Client switches. Even so, this work of the Provider switches is much less computation and data transfer than the forwarding of conventional Link State Records. Indeed, the format of a Summary Record already defined by standard ― this would be a new use. Note moreover, that this may also minimize the processing required of all the core switches.

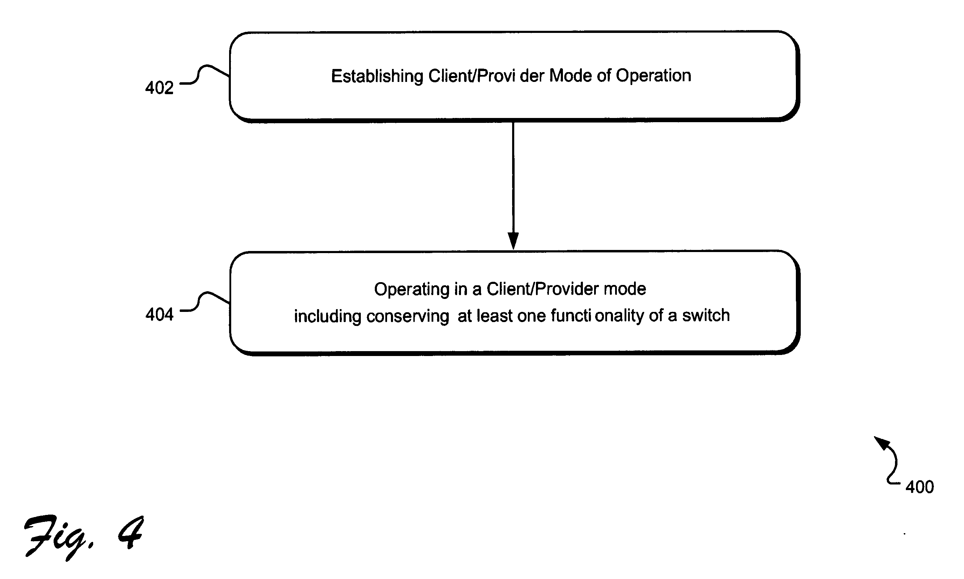

General and then more specific depictions of how protocols hereof may be implemented are next described. Fig. 4 provides a representative flowchart 400 of the more basic steps. A general first step 402 is the establishing of the Client/Provider capability and operational mode which may include the communicational aspects, e.g., negotiation and/or advertising of capabilities, between switches. This step may as well include the explicit or implicit initialization of the Client and Provider mode between at least two connected switches. Implicit initialization may be simple assumption of the proper mode upon receipt of an appropriate advertisement from a proper adjacent switch (e.g., a first switch which is capable of and advertises Client mode and receives a Provider advertisement from an adjacent Provider switch may then simply assume the Client mode). A second general step 404 is the operating of the at least two switch devices in a provider/client mode; particularly wherein the operating of the at least two switch devices in a provider/client mode includes conserving at least one functionality of at least one of the first and second switch devices.

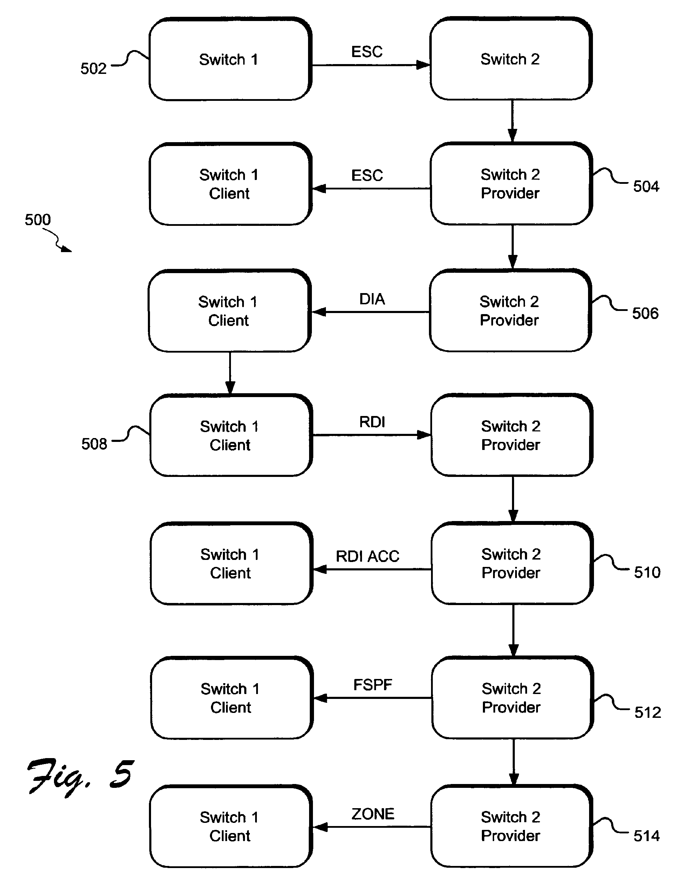

A more detailed implementation of how a Protocol hereof may work is shown in Fig. 5 by the flow diagram 500 and is described here. First as indicated at 502 a negotiation is begun for entry into the Client/Provider capability and operational mode. In particular, an ESC ILS (Exchange Switch Capability Internal Link Service) may be used for this communication. Though either switch could initiate this, Switch 1 is shown at 502 initiating the advertising of the Client/Provider operability. In this case, switch 1 is advertising to act as a Client. At 504, switch 2 is shown responding with a communication/advertisement via ESC that it will act as a Provider. Both switches then assume these roles. It may be noted that these initial roles may include or may be assumed without domain ID sharing. Furthermore, once negotiated, no EFPs (Exchange Fabric Parameters) are exchanged between Providers and Clients.

In the next steps as indicated at 506, the Client awaits a DIA (Domain Identifier Assigned) signal, which the Provider is obtaining from the fabric Principal Switch (not shown). Then, as indicated at 508, once the DIA received by the Client, the Client then issues a new form of RDI (Request Domain Identifier) that: specifies the number of addresses required for the external devices to which it is/will be connected, and specifies whether it can accept contiguous Area/Port assignments or limited to Area assignments. Next, as indicated at 510, the Provider returns a new form of RDI ACC that provides base Domain/Area or Domain/Area/Port identifiers for the Client's use.

At 512, the Provider is shown providing an FSPF Summary Record, which may be provided on join, fabric build, reconfigure fabric, or topology change that would change the content of the summary record. And, at 514, the zone database is shown as pushed from the Provider to the Client, noting that the zone database merge operation is not performed.

The operating efficiencies here described solve three main problems: first, reducing the processing time and quantity required to one or more interswitch functions; e.g., zoning, principal switch selection, and shortest path first. Second, greatly reduced also is the memory space required to for storage of datasets such as zonesets or link state records. Third, an operational efficiency may be found in the sharing of domain IDs such that faster routing may be achieved, and/or increases may be had in the practical limit of the number of switches and the number of end devices that may exist in a switch fabric. These technologies may thus increase the practical limit on the size of a switch fabric.

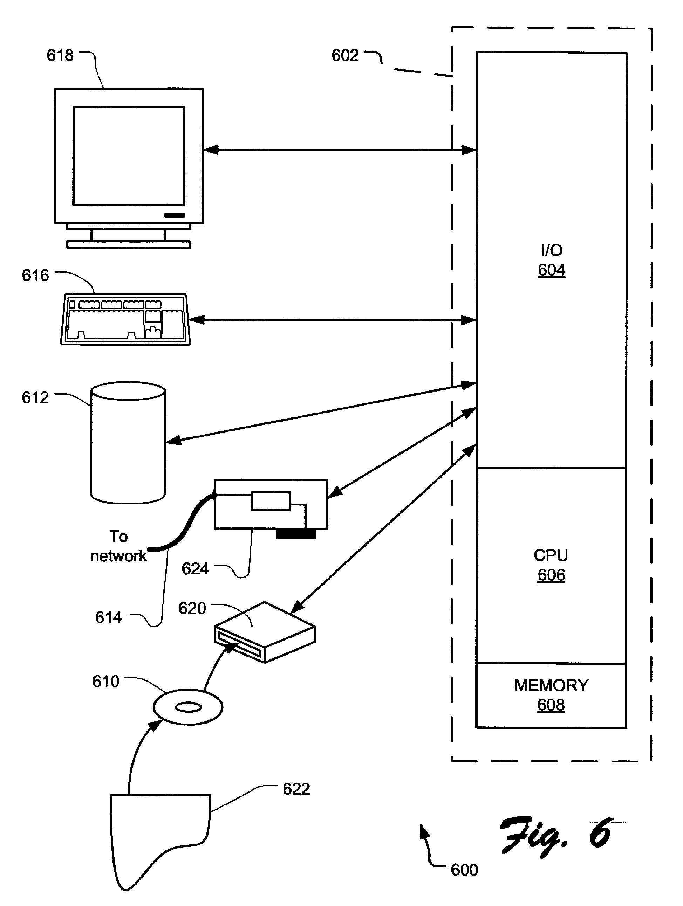

FIG. 6 illustrates an exemplary system useful in implementations of the described technology. A general purpose computer system 600 is capable of executing a computer program product to execute a computer process. Data and program files may be input to the computer system 600, which reads the files and executes the programs therein. Some of the elements of a general purpose computer system 600 are shown in FIG. 6 wherein a processor 602 is shown having an input/output (I/O) section 604, a Central Processing Unit (CPU) 606, and a memory section 608. There may be one or more processors 602, such that the processor 602 of the computer system 600 comprises a single central-processing unit 606, or a plurality of processing units, commonly referred to as a parallel processing environment. The computer system 600 may be a conventional computer, a distributed computer, or any other type of computer. The described technology is optionally implemented in software devices loaded in memory 608, stored on a configured DVD/CD-ROM 610 or storage unit 612, and/or communicated via a wired or wireless network link 614 on a carrier signal, thereby transforming the computer system 600 in FIG. 6 to a special purpose machine for implementing the described operations.

The I/O section 604 is connected to one or more user-interface devices (e.g., a keyboard 616 and a display unit 618), a disk storage unit 612, and a disk drive unit 620. Generally, in contemporary systems, the disk drive unit 620 is a DVD/CD-ROM drive unit capable of reading the DVD/CD-ROM medium 610, which typically contains programs and data 622 program products containing mechanisms to effectuate the systems and methods in accordance with the described technology may reside in the memory section 604, on a disk storage unit 612, or on the DVD/CD-ROM medium 610 of such a system 600. Alternatively, a disk drive unit 620 may be replaced or supplemented by a floppy drive unit, a tape drive unit, or other storage medium drive unit. The network adapter 624 is capable of connecting the computer system to a network via the network link 614, through which the computer system can receive instructions and data embodied in a carrier wave. Examples of such systems include SPARC systems offered by Sun Microsystems, Inc., personal computers offered by Dell Corporation and by other manufacturers of Intel-compatible personal computers, PowerPC-based computing systems, ARM-based computing systems and other systems running a UNIX-based or other operating system. It should be understood that computing systems may also embody devices such as Personal Digital Assistants (PDAs), mobile phones, gaming consoles, set top boxes, etc.

When used in a LAN-networking environment, the computer system 600 is connected (by wired connection or wirelessly) to a local network through the network interface or adapter 624, which is one type of communications device. When used in a WAN-networking environment, the computer system 600 typically includes a modem, a network adapter, or any other type of communications device for establishing communications over the wide area network. In a networked environment, program modules depicted relative to the computer system 600 or portions thereof, may be stored in a remote memory storage device. It is appreciated that the network connections shown are exemplary and other means of and communications devices for establishing a communications link between the computers may be used.

In accordance with an implementation, software instructions and data directed toward creating and maintaining administration domains, enforcing configuration access control, effecting configuration access of SAN resources by a user, and other operations may reside on disk storage unit 609, disk drive unit 607 or other storage medium units coupled to the system. Said software instructions may also be executed by CPU 606.

The embodiments of the invention described herein are implemented as logical steps in one or more computer systems. The logical operations of the present invention are implemented (1) as a sequence of processor-implemented steps executing in one or more computer systems and (2) as interconnected machine or circuit modules within one or more computer systems. The implementation is a matter of choice, dependent on the performance requirements of the computer system implementing the invention. Accordingly, the logical operations making up the embodiments of the invention described herein are referred to variously as operations, steps, objects, or modules. Furthermore, it should be understood that logical operations may be performed in any order, unless explicitly claimed otherwise or a specific order is inherently necessitated by the claim language.

The above specification, examples and data provide a complete description of the structure and use of exemplary embodiments of the invention. Since many embodiments of the invention can be made without departing from the scope of the invention, the invention resides in the claims hereinafter appended. Furthermore, structural features of the different embodiments may be combined in yet another embodiment without departing from the recited claims.

## Claims

1. A method of managing a switch fabric (105) in a computer network, the switch fabric containing a plurality of switches (112-120), the method comprising:
establishing (402) a client/provider mode of operation between at least two switches of the plurality of switches; and
operating (404) the at least two switches in the client/provider mode;
**characterised in that**:
wherein the operating of the at least two switches in a client/provider mode includes conserving at least a domain identifier (domain ID) of at least one of the at least two switches.

2. A method according to claim 1 wherein the managing of a switch fabric includes one or more of building, developing, maintaining, reconfiguring or changing the switch fabric.

3. A method according to claim 1 wherein the conserving is a reduction in a functionality of at least one of the at least two switches.

4. A method according to claim 1 wherein the establishing (402) of the client/provider mode includes negotiating (502) between the at least two switches to enter a client/provider mode of operation.

5. A method according to claim 4 wherein the negotiating (502) between the at least two switches to enter a client/provider mode of operation includes at least one of:
a) advertising by at least one of the at least two switches of the capability of the at least one switch of acting in one or both of a client and provider role,
b) a determination that a first one of the at least two switches will assume the client role in the client/provider mode,
c) a determination that a first one of the at least two switches will assume the provider role in the client/provider mode.

6. A method according to claim 5 wherein the negotiating includes a determination that a first one of the at least two switches will assume the client role in the client/provider mode and the negotiating further includes a determination that a second one of the at least two switches will assume the provider role in the client/provider mode.

7. A method according to claim 1 wherein the establishing includes at least one of:
a) one of explicit or implicit establishment of the client/provider mode between the at least two switches;
b) implicit establishment of the client/provider mode between the at least two switches, the implicit establishment including assumption by a first one of the at least two switches of either of the client or provider modes upon receipt of an appropriate advertisement from second one of the at least two switches;

8. A method according to claim 1 wherein the conserving step includes at least one of:
a) conserving one or more of: zoning; principal switch selection; and fabric shortest path first selection;
b) excluding the at least one switch from one or more of the domain identification process; the zoning process; the principal switch selection process; and the fabric shortest path first selection process;
c) providing for one or both of sharing of a domain ID of a provider switch with a client switch and sharing a domain ID amongst a subset of two or more client switches;
d) defining one or more domain IDs, each domain ID specifying a subset of one or more switches, wherein the subset of switches includes at least one of the at least two switches operating in the client/provider mode;
e) providing for one or more of reduced zoneset communication; reduced zone processing; and reduced local zoneset storage for at least one of the at least two switches operating in the client/provider mode;
f) providing for one or more of reduced principal switch selection communications; reduced principal switch selection processing and reduced local principal switch selection data storage for at least one of the at least two switches operating in the client/provider mode;
g) providing for one or more of reduced fabric shortest path first communications; reduced fabric shortest path first processing and reduced local fabric shortest path first data storage for at least one of the at least two switches operating in the client/provider mode.

9. A computer program product encoding a computer program for a computer process that executes on a computer system that manages a switch fabric in a computer network, the switch fabric containing a plurality of switches, the computer process being configured when executing on the computer system to carry out the method steps of any one of claims 1 to 8.

10. A computer network system comprising:
at least one computer server;
at least one storage device; and
a switch fabric containing a plurality of switches;
wherein the switch fabric connects the at least one computer server with the at least one storage device; and
wherein at least two of the plurality of switches switch fabric are adapted to operate in a client/provider mode;
**characterised in that**:
whereby the operating of the at least two switches in a client/provider mode includes conserving at least a domain identifier (domain ID) of at least one of the at least two switches.

## Patentansprüche

1. Verfahren zum Handhaben eines Schaltsystems (105) in einem Computernetzwerk, welches Schaltsystem eine Vielzahl von Schaltern (112 -120) enthält, welches Verfahren folgende Schritte enthält:
Einrichten (402) eines Client-/Provider-Betriebsmodus zwischen wenigstens zwei Schaltern aus der Vielzahl von Schaltern; und
Betreiben (404) der wenigstens zwei Schalter im Client-/Provider-Modus;
**dadurch gekennzeichnet, dass** das Betreiben der wenigstens zwei Schalter in einem Client-/Provider-Modus das Bewahren wenigstens einer Domain-Identifizierung (Domain-ID) wenigstens einer der wenigstens zwei Schalter beinhaltet.

2. Verfahren nach Anspruch 1, in welchem das Handhaben eines Schaltsystems einen oder mehrere folgende Schritte enthält: Aufstellen, Entwickeln, Erhalten, Rekonfigurieren oder Wechseln des Schaltsystems.

3. Verfahren nach Anspruch 1, in welchem das Bewahren eine funktionalen Reduktion wenigstens eines der wenigstens zwei Schalter ist.

4. Verfahren nach Anspruch 1, in welchem das Einrichten (402) des Client-/Provider-Modus das Aushandeln (502) zwischen den wenigstens zwei Schaltern umfasst, um in einen Client-/Provider-Betriebsmodus einzutreten.

5. Verfahren nach Anspruch 4, in welchem das Aushandeln (502) zwischen den wenigstens zwei Schaltern zum Eintritt in den Client-/Provider-Betriebsmodus wenigstens einen folgender Schritte enthält:
a) Ankündigen seitens eines der beiden Schalter der Fähigkeit des wenigstens eines Schalters in einem oder beiden der client- und provider-Rolle zu agieren,
b) eine Feststellung, dass ein erster der wenigstens zwei Schalter die Client-Rolle in dem Client-/Provider-Modus einnehmen wird;
c) eine Feststellung, dass ein erster der wenigstens zwei Schalter die Provider-Rolle in dem Client-/Provider-Modus einnehmen wird.

6. Verfahren nach Anspruch 5, in welchem das Aushandeln eine Feststellung enthält, dass ein erster der wenigstens zwei Schalter die Client-Rolle in dem Client-/Provider-Modus einnehmen wird, und in welchem das Aushandeln weiterhin eine Feststellung enthält, dass ein zweiter der wenigstens zwei Schalter die Provider-Rolle in dem Client-/Provider-Modus einnehmen wird.

7. Verfahren nach Anspruch 1, in welchem das Einrichten wenigstens einen der folgenden Schritte enthält:
a) eine explizite oder implizite Einrichtung des Client-/Provider-Modus zwischen den wenigstens zwei Schaltern;
b) die implizite Einrichtung des Client-/Provider-Modus zwischen den wenigstens zwei Schaltern, wobei die implizite Einrichtung die Annahme entweder des Client- oder Provider-Modus durch einen ersten der wenigstens zwei Schalter auf Erhalt einer geeigneten Ankündigung von dem zweiten der wenigstens zwei Schalter enthält.

8. Verfahren nach Anspruch 1, in welchem der Schritt des Bewahrens wenigstens einen der folgenden Schritte aufweist:
a) Erhalten eines oder mehrerer folgender Attribute: Zonierung; Hauptschalterauswahl; und eine erste Auswahl des kürzesten Netzpfades;
b) Exkludieren des wenigstens einen Schalters von einem oder mehreren folgender Attribute:
dem Domain-Identifizierungs-Prozess; dem Zonierungsprozess;
dem Hauptschalter-Selektionsprozess; und dem ersten Auswahlprozess für den kürzesten Netzpfad;
c) Vorsehen für einen oder beide das Teilen einer Domain-ID eines Providerschalters mit einem Client-Schalter und Teilen einer Domain-ID zwischen dem Untersatz von zwei oder mehreren Client-Schaltern;
d) Definieren einer oder mehrerer Domain-IDs, wobei jede Domain-ID ein Untersatz von zwei oder mehreren Schaltern spezifiziert, wobei der Untersatz von Schaltern wenigstens einen der wenigstens zwei Schalter enthält, die im Client-/Provider-Modus arbeiten;
e) Vorsehen eines oder mehrerer der folgenden Attribute:
reduzierte Zonensetzkommunikation; reduzierte Zonenverarbeitung; und reduzierte lokale Zonensetzspeicherung für wenigstens einen der wenigstens zwei Schalter, die im Client-/Provider-Modus arbeiten;
f) Vorsehen eines oder mehrerer der folgenden Attribute:
reduzierte Hauptschalterauswahlkommunikationen; reduzierte Hauptschalterauswahlverarbeitung und reduzierte lokale Hauptschalterselektionsdatenspeicherung für wenigstens einen der beiden Schalter, die im Client-/Provider-Modus arbeiten;
g) Vorsehen eines oder mehrerer der folgenden Attribute:
reduzierte erste Kommunikationen bezüglich des kürzesten Systempfades; reduziertes erstes Verarbeiten des kürzesten Systempfades und reduziertes Speichern der lokalen ersten Daten des kürzesten Netzpfades für wenigstens einen der wenigstens zwei Schalter, die im Client-/Provider-Modus arbeiten.

9. Ein Computerprogrammprodukt, das ein Computerprogramm für einen Rechenprozess encodiert, der auf einem Computersystem ausführbar ist, welches ein Schaltsystem in einem Computernetzwerk managt, welches Schaltsystem eine Vielzahl von Schaltern umfasst, wobei der Rechenprozess so konfiguriert ist, dass er, wenn er auf dem Computersystem durchgeführt wird, die Verfahrensschritte nach einem der Ansprüche 1- 8 realisiert.

10. Computernetzwerksystem umfassend:
wenigstens einen Computerserver;
wenigstens eine Speichereinrichtung;
ein Schaltsystem, das eine Vielzahl von Schaltern umfasst;
worin das Schaltsystem den wenigstens einen Computerserver mit der wenigstens einen Speichereinrichtung verbindet; und
worin wenigstens zwei aus der Vielzahl von Schaltern in dem Schaltsystem dazu geeignet sind, in einem Client-/Provider-Modus zu arbeiten, **dadurch gekennzeichnet, dass** das Betreiben der wenigstens zwei Schalter in einem Client-/Provider-Modus das Bewahren wenigstens einer Domain-Identifizierung (Domain-ID) von wenigstens einem der wenigstens zwei Schalter umfasst.

## Revendications

1. Procédé de gestion d'une matrice de commutation (105) dans un réseau d'ordinateurs, la matrice de commutation contenant une pluralité de commutateurs (112 - 120), le procédé comprenant les étapes consistant à :
établir (402) un mode de fonctionnement client/fournisseur entre au moins deux commutateurs de la pluralité de commutateurs ; et
actionner (404) les -au moins- deux commutateurs dans le mode client/ fournisseur ;
**caractérisé en ce que** :
l'étape consistant à actionner les au moins deux commutateurs dans un mode client / fournisseur comprend une étape consistant à préserver au moins un identifiant de domaine (ID de domaine) de l'un au moins des au moins deux commutateurs.

2. Procédé selon la revendication 1, dans lequel l'étape consistant à gérer une matrice de commutation comprend une ou plusieurs étapes consistant à bâtir, développer, mettre à jour, reconfigurer ou modifier la matrice de commutation.

3. Procédé selon la revendication 1, dans lequel l'étape de préservation est une réduction d'une fonctionnalité de l'un au moins des au moins deux commutateurs.

4. Procédé selon la revendication 1, dans lequel l'étape consistant à établir (402) le mode client/fournisseur comprend une étape consistant à négocier (502) entre les au moins deux commutateurs de façon à entrer dans un mode de fonctionnement client / fournisseur.

5. Procédé selon la revendication 4, dans lequel l'étape consistant à négocier (502) entre les au moins deux commutateurs de façon à entrer dans un mode de fonctionnement client / fournisseur comprend l'une d'une :
a) annonce par l'un au moins des au moins deux commutateurs de la capacité du ou des commutateurs d'agir dans un rôle de client et de fournisseur, voire les deux ;
b) une détermination selon laquelle un premier des au moins deux commutateurs assume le rôle de client dans le mode client/fournisseur ;
c) une détermination selon laquelle un premier des au moins deux commutateurs assume le rôle de fournisseur dans le mode client/fournisseur.

6. Procédé selon la revendication 5, dans lequel l'étape de négociation comprend une détermination selon laquelle un premier des au moins deux commutateurs assume le rôle de client dans le mode client / fournisseur et l'étape de négociation comprend en outre une détermination selon laquelle un deuxième des au moins deux commutateurs assume le rôle de fournisseur dans le mode client / fournisseur.

7. Procédé selon la revendication 1, dans lequel l'étape d'établissement comprend au moins l'un d'un :
a) l'un d'un établissement explicite ou implicite du mode client/ fournisseur entre les au moins deux commutateurs ;
b) un établissement implicite du mode client / fournisseur entre les au moins deux commutateurs, un établissement implicite qui comprend la prise par un premier des au moins deux commutateurs des modes client ou fournisseur lors de la réception d'une annonce appropriée en provenance du deuxième des au moins deux commutateurs.

8. Procédé selon la revendication 1, dans lequel l'étape de préservation comprend l'une au moins des étapes consistant à :
a) préserver un ou plusieurs: d'un découpage en zones; d'une sélection de commutateur principal; et d'une première sélection du chemin le plus court de matrice;
b) exclure le ou les commutateurs d'un ou de plusieurs: du procédé d'identification de domaine ; du procédé de découpage en zones; du procédé de sélection de commutateur principal; et du procédé de première sélection du chemin le plus court de matrice;
c) fournir l'un d'un partage d'un ID de domaine d'un commutateur de fournisseur avec un commutateur de client et d'un partage d'un ID de domaine parmi un sous-ensemble de deux commutateurs de client ou plus, voire les deux ;
d) définir un ou plusieurs ID de domaine, chaque ID de domaine spécifiant un sous-ensemble d'un ou de plusieurs commutateurs, dans lequel le sous-ensemble de commutateurs comprend l'un au moins des au moins deux commutateurs qui fonctionne dans le mode client / fournisseur ;
e) fournir un ou plusieurs: d'une communication d'ensemble de zones réduite ; d'un traitement de zone réduit ; et d'un stockage d'ensemble de zones locales réduit pour l'un au moins des au moins deux commutateurs qui fonctionne dans le mode client / fournisseur ;
f) fournir un ou plusieurs parmi: des communications de sélection de commutateur principal réduites ; un traitement de sélection de commutateur principal réduit et un stockage de données de sélection de commutateur principal local réduit pour l'un au moins des au moins deux commutateurs qui fonctionne dans le mode client / fournisseur;
g) fournir un ou plusieurs parmi : des premières communications du chemin le plus court de matrice réduites ; un premier traitement de chemin le plus court de matrice réduit et un stockage de premières données de chemin le plus court de matrice locale réduit pour l'un au moins des au moins deux commutateurs qui fonctionne dans le mode client / fournisseur.

9. Produit programme informatique codant un programme informatique pour un traitement d'ordinateur qui s'exécute sur un système informatique qui gère une matrice de commutation dans un réseau d'ordinateurs, la matrice de commutation contenant une pluralité de commutateurs, le procédé informatique étant configuré quand il s'exécute sur le système informatique de façon à exécuter les étapes de procédé selon l'une quelconque des revendications 1 à 8.

10. Système de réseau d'ordinateurs comprenant :
au moins un serveur d'ordinateurs ;
au moins un dispositif de stockage ; et
une matrice de commutation qui contient une pluralité de commutateurs ;
dans lequel la matrice de commutation connecte le ou les serveurs d'ordinateurs au ou aux dispositifs de stockage ; et
dans lequel au moins deux de la pluralité de commutateurs de la matrice de commutation sont adaptés de façon à fonctionner dans un mode client / fournisseur ;
**caractérisé en ce que** :
l'actionnement des au moins deux commutateurs dans un mode client/ fournisseur comprend la préservation d'au moins un identifiant de domaine (ID de domaine) de l'un au moins des au moins deux commutateurs.
